# EUROPÄISCHE PATENTSCHRIFT

(11) **EP 3 755 915 B1**
(45) Veröffentlichungstag und Bekanntmachung des Hinweises auf die Patenterteilung: **15.03.2023**
(21) Anmeldenummer: 19705450.5
(22) Anmeldetag: 22.01.2019
(51) Int. Cl.: F16D 13/56, F16D 13/54, F16D 13/71

(54) **REIBKUPPLUNG FÜR EINEN ANTRIEBSSTRANG EINES KRAFTFAHRZEUGS MIT ZUMINDEST EINER BLATTFEDER ZUR VERSTÄRKUNG EINER ANPRESSKRAFT EINER FEDEREINRICHTUNG**
FRICTION CLUTCH FOR A DRIVETRAIN OF A MOTOR VEHICLE HAVING AT LEAST ONE LEAF SPRING FOR BOOSTING A PRESSING FORCE OF A SPRING DEVICE
EMBRAYAGE À FRICTION POUR UNE CHAÎNE CINÉMATIQUE D'UN VÉHICULE À MOTEUR, COMPRENANT AU MOINS UN RESSORT À LAMES DESTINÉ À AMPLIFIER UNE FORCE DE PRESSION D'UN DISPOSITIF À RESSORT

(30) Priorität: 22.02.2018 DE 102018103981
(43) Veröffentlichungstag der Anmeldung: 30.12.2020
(73) Patentinhaber: Schaeffler Technologies AG & Co. KG, 91074 Herzogenaurach (DE)
(72) Erfinder: HAMMERSTIEL, Fabian, 76189 Karlsruhe (DE); RABER, Christoph, 66564 Ottweiler-Steinbach (DE); VOGEL, Florian, 77815 Bühl (DE); FINKENZELLER, Marc, 77723 Gengenbach (DE); RÖLL, Marcel, 77833 Ottersweier (DE); ASCHOFF, Michael, 77815 Bühl (DE)
(86) Internationale Anmeldenummer: PCT/DE2019/100063
(87) Internationale Veröffentlichungsnummer: WO 2019/161827

(56) Entgegenhaltungen:
- WO-A1-2017/129178
- DE-A1-102013 225 593
- DE-A1-102014 224 374

## Beschreibung

Die vorliegende Erfindung betrifft eine Reibkupplung für einen Antriebsstrang eines Kraftfahrzeugs gemäß dem Oberbegriff des Anspruchs 1. Reibkupplungen dienen in Antriebssträngen von Kraftfahrzeugen, wie beispielsweise Personenkraftwagen, Lastkraftwagen oder Krafträdern, dem Ausgleich einer Antriebsdrehzahl und einer Getriebedrehzahl insbesondere während Anfahrvorgängen des Kraftfahrzeugs.

Beim Schließen einer Lamellenkupplung im Zugbetrieb des Antriebsmotors entsteht in einer Verzahnung zwischen Lamellen und Lamellenträger durch das steigende Übertragungsmoment in der Reibkupplung eine Reibkraft, die der Anpresskraft, die in der Reibkupplung durch eine Tellerfeder erzeugt wird, entgegenwirkt. Diese Reibkraft stellt somit einen Anpresskraftverlust in der Reibkupplung dar, der bei gleichbleibender Betätigungskraft in der Reibkupplung das übertragbare Drehmoment reduziert und damit den Wirkungsgrad der Reibkupplung verschlechtert. Um ein vorgegebenes Drehmoment des Antriebsmotors mit der Reibkupplung sicher übertragen zu können, müssen diese Verluste berücksichtig und kompensiert werden. Dies wird über eine entsprechende Erhöhung der Anpresskraft realisiert, was bei einer Reibkupplung ohne Verstärkungsfunktion eine Erhöhung der Betätigungskraft der Reibkupplung mit sich bringt. Diese Tatsache kann im Konflikt mit einer maximal zulässigen Betätigungskraft und der Bauraumvorgabe für die Reibkupplung stehen.

Bekannte trockene Reibkupplungen für die Anwendung in Kraftfahrzeugen mit einem Hybridantrieb, der sowohl einen Verbrennungsmotor als auch einen Elektromotor zum Antrieb des Kraftfahrzeugs umfasst, weisen keine entsprechende Verstärkungsfunktionen der Anpresskraft auf. Die benötigte Anpresskraft wird ausschließlich durch eine Tellerfeder generiert und ist wiederum durch den Aktor zur Betätigung der Reibkupplung in ihrer Höhe begrenzt.

Aus der DE 10 2014 224 374 A1 ist eine Reibkupplung bekannt, die auf den Oberbegriff des Anspruchs 1 lesbar ist.

Aufgabe der Erfindung ist es, die mit Bezug auf den Stand der Technik geschilderten Probleme zumindest teilweise zu lösen und insbesondere eine Reibkupplung für einen Antriebsstrang eines Kraftfahrzeugs mit insbesondere einem Hybridantrieb anzugeben, bei der ein Anpresskraftverlust kompensierbar ist.

Diese Aufgabe wird gelöst mit einer Reibkupplung gemäß den Merkmalen des unabhängigen Anspruchs. Weitere vorteilhafte Ausgestaltungen der Reibkupplung sind in den abhängig formulierten Ansprüchen angegeben. Es ist darauf hinzuweisen, dass die in den abhängigen Ansprüchen einzeln aufgeführten Merkmale in beliebiger technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Hierzu trägt eine Reibkupplung für einen Antriebsstrang eines Kraftfahrzeugs bei, die zumindest die folgenden Komponenten aufweist:
- ein Eingangsteil mit einem durch zumindest einen Antriebsmotor um eine Drehachse drehbaren Außenlamellenträger, wobei an dem Außenlamellenträger zumindest eine Außenlamelle befestigt ist;
- ein Ausgangsteil mit einem Rotorträger und einem von dem Rotorträger getrennten Innenlamellenträger, wobei an dem Innenlamellenträger zumindest eine Innenlamelle befestigt ist;
- zumindest eine Federeinrichtung, mit der die zumindest eine Außenlamelle und die zumindest eine Innenlamelle zum Schließen der Reibkupplung mit einer Anpresskraft verspannbar sind; und
- zumindest eine Blattfeder, die mit dem Innenlamellenträger und dem Rotorträger derart verbunden ist, dass die zumindest eine Blattfeder bei Einleitung eines Drehmoments durch den Antriebsmotor die Anpresskraft mit einer Verstärkungskraft verstärkt.

Die vorgeschlagene (trockene) Reibkupplung ist für einen Antriebsstrang eines Kraftfahrzeugs, beispielsweise eines Personenkraftwagens, Lastkraftwagens und/oder Kraftrads, vorgesehen. Solche Kraftfahrzeuge weisen regelmäßig zumindest einen Antriebsmotor zum Antreiben des Kraftfahrzeugs auf. Bei dem zumindest einen Antriebsmotor kann es sich insbesondere um einen Hybridmotor handeln, der sowohl einen Verbrennungsmotor als auch zumindest einen Elektroantrieb zum Antrieb des Kraftfahrzeugs aufweist. Der zumindest eine Elektromotor kann beispielsweise mit einer Betriebsspannung von 24 V (Volt) oder 48 V betreibbar sein. Weiterhin weisen solche Kraftfahrzeuge regelmäßig ein Getriebe auf, das beispielsweise als Automatikgetriebe oder ein von einem Fahrer manuell geschaltetes Schaltgetriebe ausgebildet sein kann.

Die Reibkupplung umfasst ein um eine Drehachse mittels des Antriebsmotors verdrehbar angeordnetes, antriebsseitiges Eingangsteil, das direkt oder indirekt beispielsweise mit einer Kurbelwelle des Antriebsmotors bzw. des Verbrennungsmotors des Hybridantriebs verbindbar ist. Weiterhin umfasst die Reibkupplung ein gegenüber dem Eingangsteil koaxial und um die Drehachse verdrehbar angeordnetes Ausgangsteil, das beispielsweise mit einer Getriebeeingangswelle des Getriebes indirekt oder direkt verbindbar ist. Das Ausgangsteil weist ferner einen Rotorträger auf, der mit einem Rotor des Elektromotors eines Hybridantriebs verbindbar ist und/oder durch den Elektromotor um die Drehachse antreibbar ist. Der Elektromotor kann koaxial zu der Drehachse der Reibkupplung bzw. zu der Drehachse des Rotorträgers angeordnet sein, sodass der Rotor des Elektromotors den Rotorträger umgibt. Der Rotorträger kann beispielsweise über eine Verzahnung an einer Umfangsfläche des Rotorträgers mit dem Rotor des Elektromotors verbunden sein. Weiterhin kann der Elektromotor parallel zu der Drehachse der Reibkupplung bzw. der Drehachse des Rotorträgers angeordnet sein. In diesem Fall kann der Elektromotor eine Riemenscheibe antreiben, die die Reibkupplung zumindest teilweise umgibt.

Somit ist die Reibkupplung, vorzugsweise die trockene Lamellenkupplung, in ein nichtdargestelltes Hybridmodul zum An- und Abkoppeln eines Verbrennungsmotors an den und vom Antriebsstrang eines Kraftfahrzeugs integriert, d.h. die Reibkupplung bildet eine K0-Kupplung. Bei dem Hybridmodul kann es sich um ein Hybridmodul mit koaxialem Elektromotor, dessen Rotor die K0-Kupplung umgibt, oder um ein Hybridmodul mit achsparallelem Elektromotor, der eine Riemenscheibe antreibt, die die K0-Kupplung umgibt, handeln. Im letztgenannten Fall ist diese Riemenscheibe aus dem Rotorträger und dem Rotor einteilig ausgebildet, oder die Riemenscheibe wird vom Rotorträger getragen, d.h. ist in dessen Außenumfang auf den Rotorträger aufgezogen.

Zwischen dem Eingangsteil und dem Ausgangsteil ist eine in eine Umfangsrichtung um die Drehachse wirksame, zwischen einer Offenstellung und Schließstellung schaltbare Reibeinheit vorgesehen. Die Reibeinheit umfasst zumindest eine mit einem Außenlamellenträger des Eingangsteils verdrehfest verbundene Außenlamelle und zumindest eine mit einem Innenlamellenträger des Ausgangsteils verdrehfest verbundene Innenlamelle. Die zumindest eine Außenlamelle kann über eine Verzahnung mit dem Außenlamellenträger und/oder die zumindest eine Innenlamelle über eine Verzahnung mit dem Innenlamellenträger verbunden sein. Der Innenlamellenträger ist insbesondere ringförmig ausgebildet, zumindest teilweise aus Stahl gefertigt und/oder weist einen L-förmigen Querschnitt auf. Weiterhin ist der Innenlamellenträger von dem Rotorträger getrennt. Dies bedeutet, dass der Innenlamellenträger in einer Umfangsrichtung um die Drehachse nicht direkt mit dem Rotorträger verdrehfest gekoppelt ist. Weiterhin kann der Innenlamellenträger in der axialen Richtung gegenüber dem Rotorträger begrenzt verlagerbar ausgebildet sein. Weiterhin ist die zumindest eine Innenlamelle nicht (direkt) mit dem Rotorträger verbunden. Die zumindest eine Außenlamelle und die zumindest eine Innenlamelle können in einer axialen Richtung, d. h. insbesondere parallel zu der Drehachse, abwechselnd geschichtet angeordnet sein. Weiterhin sind die zumindest eine Außenlamelle und/oder die zumindest eine Innenlamelle insbesondere ringförmig und/oder zumindest teilweise aus Stahl gefertigt. Zudem können die zumindest eine Außenlamelle und/oder die zumindest eine Innenlamelle Reibbeläge aufweisen.

Die zumindest eine Außenlamelle und die zumindest eine Innenlamelle sind zum Schließen der Reibkupplung durch eine Anpresskraft zumindest einer Federeinrichtung verspannbar bzw. in Reibeingriff bringbar. Insbesondere sind die zumindest eine Außenlamelle und die zumindest eine Innenlamelle in der axialen Richtung zwischen dem Innenlamellenträger und dem Rotorträger verspannbar. Bei der zumindest einen Federeinrichtung handelt es sich insbesondere um eine Tellerfeder. Die Reibkupplung ist durch die zumindest eine Federeinrichtung normal-eingerückt.

Die Reibkupplung weist darüber hinaus zumindest eine Blattfeder auf, die mit dem Innenlamellenträger und dem Rotorträger derart verbunden ist, dass die zumindest eine Blattfeder bei Einleitung eines Drehmoments durch den Antriebsmotor bzw. den Verbrennungsmotor des Hybridantriebs die Anpresskraft mit einer Verstärkungskraft verstärkt. Die Reibkupplung kann eine Mehrzahl von übereinandergeschichteten Blattfedern in Form zumindest eines Blattfederpakets aufweisen. Die zumindest eine Blattfeder ist zwischen dem Innenlamellenträger und dem Rotorträger aufgestellt bzw. mit einem Aufstellwinkel angeordnet. Dies bedeutet insbesondere, dass die zumindest eine Blattfeder zumindest teilweise nicht parallel zu der axialen Richtung und/oder der radialen Richtung verläuft. Aufgrund des Aufstellwinkels resultiert das über den Innenlamellenträger in die zumindest eine Blattfeder eingeleitete Drehmoment in einer Kraft mit einer axialen Richtungskomponente. Die axiale Richtungskomponente der Kraft stellt die Verstärkungskraft dar, die insbesondere in der gleichen Richtung wie die Anpresskraft der zumindest einen Federeinrichtung wirkt und diese somit verstärkt. Wird von dem Antriebsmotor ein Zugmoment über den Außenlamellenträger und die zumindest eine Außenlamelle an die zumindest eine Innenlamelle und den Innenlamellenträger übertragen, überträgt der Innenlamellenträger dieses Zugmoment über die zumindest eine aufgestellte Blattfeder an den Rotorträger. Durch den Aufstellwinkel der zumindest einen Blattfeder wird durch das übertragene Drehmoment die Verstärkungskraft in der axialen Richtung erzeugt. Die Verstärkungskraft wirkt insbesondere in Richtung einer Getriebeseite auf den Innenlamellenträger. Da die Anpresskraft der zumindest einen Federeinrichtung ebenfalls auf den Innenlamellenträger wirken kann, wird die durch die zumindest einer Federeinrichtung erzeugte Anpresskraft über die in Richtung Getriebeseite wirkende Verstärkungskraft der zumindest einen Blattfeder verstärkt. Hierdurch sind Anpresskraftverluste kompensierbar.

Die zumindest eine Blattfeder ist über einen Adapterring mit dem Rotorträger verbunden. Insbesondere kann die zumindest eine Blattfeder mit dem Adapterring vernietet sein. Der Adapterring ist insbesondere ringförmig und/oder aus Metall gefertigt. Der Adapterring ist insbesondere über seinen Innenumfang mit dem Rotorträger verbunden.

Der Adapterring weist eine Mehrzahl von radial nach innen gerichtete Befestigungslaschen auf, über die der Adapterring mit dem Rotorträger verbunden ist und die einen Drucktopf durchgreifen, über den die zumindest eine Federeinrichtung die zumindest eine Außenlamelle und die zumindest eine Innenlamelle verspannt. Die Mehrzahl von radial nach innen gerichteten Befestigungslaschen sind insbesondere um einen Innendurchmesser des Adapterring (gleichmäßig) verteilt angeordnet. Die Befestigungslaschen erstrecken sich in der radialen Richtung insbesondere durch Öffnungen in dem Drucktopf. Die zumindest eine Federeinrichtung drückt insbesondere von einer Motorseite der Reibkupplung auf den Drucktopf, sodass der Drucktopf die Anpresskraft auf den Innenlamellenträger überträgt. Die Reibkupplung ist mit einer Ausrückvorrichtung ausrückbar, in dem die Ausrückvorrichtung eine der Anpresskraft entgegenwirkende Ausrückkraft auf den Drucktopf erzeugt. Durch die Ausrückkraft ist der Drucktopf begrenzt in der axialen Richtung verlagerbar.

Zwischen dem Innenlamellenträger und dem Drucktopf kann eine Modulationsfeder angeordnet sein. Die Modulationsfeder kann ein festes Ende und ein freies Ende aufweisen, wobei das feste Ende insbesondere mit dem Innenlamellenträger verbunden ist. Das freie Ende ragt in der axialen Richtung von dem Innenlamellenträger insbesondere in Richtung des Drucktopfs. Auf diese Weise kann bei Bereitstellung der Anpresskraft das Einkuppeln der Reibkupplung sanfter ausgestaltet werden.

Die Verstärkungskraft kann in eine axiale Richtung gerichtet sein.

Die Verstärkungskraft kann in Richtung einer Getriebeseite der Reibkupplung gerichtet sein.

Die zumindest eine Blattfeder kann beim Verstärken der Anpresskraft mit der Verstärkungskraft auf Schub beansprucht sein.

Die zumindest eine Blattfeder kann mit dem Innenlamellenträger vernietet sein. Die zumindest eine Blattfeder ist insbesondere an einem ersten längsseitigen Ende mit dem Innenlamellenträger vernietet. Die zumindest eine Blattfeder ist insbesondere an einem dem ersten längsseitigen Ende gegenüberliegenden zweiten längsseitigen Ende mit dem Adapterring verdrehfest bzw. momentenschlüssig verbunden.

Die zumindest eine Blattfeder kann in einer axialen Richtung neben dem Innenlamellenträger angeordnet sein. Insbesondere ist die zumindest eine Blattfeder nicht radial innerhalb des Innenlamellenträgers angeordnet.

Die zumindest eine Federeinrichtung oder ein Drucktopf, über den die zumindest eine Federeinrichtung die zumindest eine Außenlamelle und die zumindest eine Innenlamelle verspannt, kann einen Querschnitt des Innenlamellenträgers in einer radialen Richtung um weniger als 50 % überspannen. Dies bedeutet insbesondere, dass ein Außendurchmesser der zumindest einen Federeinrichtung und/oder des Drucktopfs im Vergleich zu einem Außendurchmesser entsprechend kleiner ausgebildet wird als ein Außendurchmesser des Innenlamellenträgers. Hierdurch kann der benötigte Platz für die Anbindung der zumindest einen Blattfeder bei gleichbleibendem Bauraum der Reibkupplung geschaffen werden. Der Querschnitt des Innenlamellenträgers kann insbesondere L-förmig ausgebildet sein.

Die Erfindung sowie das technische Umfeld werden nachfolgend anhand der Figur näher erläutert. Es ist darauf hinzuweisen, dass die Figur eine besonders bevorzugte Variante der Erfindung zeigt, diese jedoch nicht darauf beschränkt ist. Es zeigt beispielhaft und schematisch:

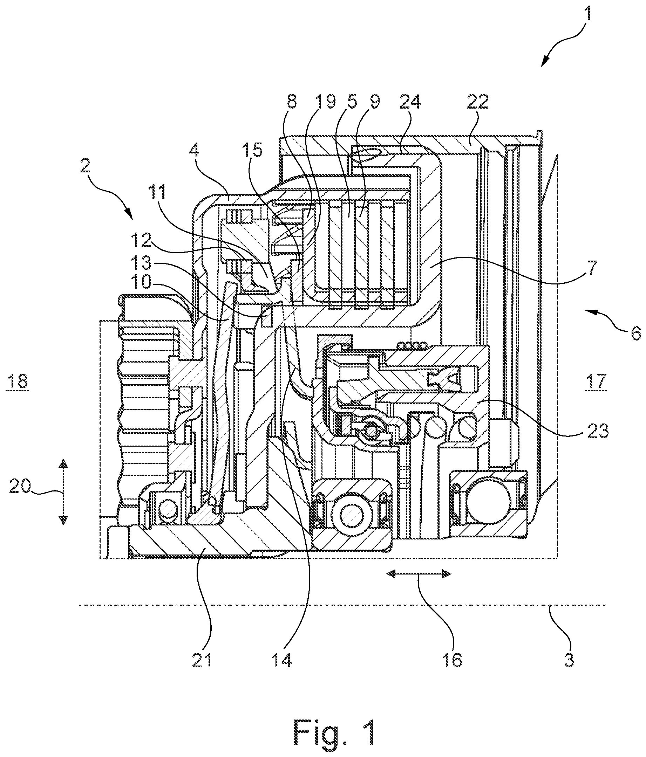

- Fig. 1:: eine Reibkupplung im Längsschnitt.

Die Fig. 1 zeigt eine Reibkupplung 1 im Längsschnitt. Insbesondere handelt es sich bei der Reibkupplung 1 um eine trockene Lamellenkupplung. Die Reibkupplung 1 weist ein auf einer Motorseite 18 angeordnetes Eingangsteil 2 und ein auf einer Getriebeseite 17 angeordnetes Ausgangsteil 6 auf. Das Eingangsteil 2 umfasst einen um eine Drehachse 3 durch einen hier nicht gezeigten Antriebsmotor bzw. Verbrennungsmotor drehbaren Außenlamellenträger 4, an dem vier Außenlamellen 5 verdrehfest über eine hier nicht gezeigte Verzahnung befestigt sind. Das Ausgangsteil 6 umfasst einen koaxial zu dem Außenlamellenträger 4 angeordneten und ebenfalls um die Drehachse 3 drehbaren Innenlamellenträger 8 auf, an dem drei Innenlamellen 9 verdrehfest über eine hier ebenfalls nicht gezeigte Verzahnung befestigt sind. Der Innenlamellenträger 8 weist einen L-förmigen Querschnitt 19 auf, wobei die Innenlamellen 9 an einem axialen Abschnitt des Querschnitts 19 an dem Innenlamellenträger 8 befestigt sind. Die Außenlamellen 5 und die Innenlamellenträger 9 sind durch eine Federeinrichtung 10, bei der es sich hier um eine Tellerfeder handelt, zum Schließen der Reibkupplung 1 zwischen dem Innenlamellenträger 8 und einem Rotorträger 7 des Ausgangsteils 6 verspannbar. Hierzu ist eine Anpresskraft der Federeinrichtung 10 über einen Drucktopf 14 und eine Modulationsfeder 15 auf den Innenlamellenträger 8 leitbar. Die Reibkupplung 1 weist ferner eine Mehrzahl von zu einem Blattfederpaket gestapelter Blattfedern 11 auf, die sich von dem Innenlamellenträger 8 in einer Umfangsrichtung um die Drehachse 3 zu einem Adapterring 12 erstrecken. Die Blattfedern 11 sind an einem ersten längsseitigen Ende der Blattfedern 11 mit dem Innenlamellenträger 8 und mit einem gegenüberliegenden zweiten längsseitigen Ende der Blattfedern 11 mit dem Adapterring 12 vernietet. Der Adapterring 12 ist über eine Mehrzahl von sich in eine radiale Richtung 20 erstreckenden Befestigungslaschen 13, die sich durch Öffnungen in dem Drucktopf 14 erstrecken, mit dem Rotorträger 7 drehfest verbunden. Hierdurch ist bei geschlossener Reibkupplung 1 ein Drehmoment eines Antriebsmotors über den Außenlamellenträger 4, die Außenlamellen 5, die Innenlamellen 9, den Innenlamellenträger 8, die Blattfedern 11 und den Adapterring 12 auf den Rotorträger 7 übertragbar.

Die zumindest eine Blattfeder 11 ist zwischen dem Innenlamellenträger 8 und dem Adapterring 12 aufgestellt bzw. mit einem Aufstellwinkel angeordnet, sodass das über den Innenlamellenträger 8 in die Blattfedern 11 als Schubkraft eingeleitete Drehmoment eine Kraft mit einer axialen Richtungskomponente erzeugt. Die axiale Richtungskomponente der Kraft stellt eine Verstärkungskraft dar, die in einer axialen Richtung 16 in Richtung der Getriebeseite 17 auf den Innenlamellenträger 8 wirkt, sodass die Anpresskraft der Federeinrichtung 10 verstärkt und Anpresskraftverluste kompensiert werden. Die Reibkupplung 1 ist mittels einer Ausrückvorrichtung 23 ausrückbar, indem mit dieser eine Ausrückkraft entgegen der Anpresskraft der Federeinrichtung 10 auf den sich durch den Rotorträger 7 erstreckenden Drucktopf 14 in der axialen Richtung 16 in Richtung der Motorseite 18 gerichtet wird. Alternativ oder kumulativ ist der Rotorträger 7 durch einen Rotor 22 eines hier nicht weiter gezeigten Elektromotors um die Drehachse 3 drehbar. Hierzu ist der Rotorträger 7 über seine Umfangsfläche 24 mit dem Rotor 22 verdrehfest verbunden. Der Rotorträger 7 ist zudem verdrehfest mit einer Nabe 21 verbunden, sodass die Nabe 21 mit dem Rotorträger 7 um die Drehachse 3 drehbar ist.

Mit Bezug auf Fig. 1 ist die Drehrichtung von der Motorseite 18 kommend in Richtung der Getriebeseite 17 blickend im Uhrzeigersinn, um die Blattfedern 11 auf Schub zu belasten, und um die Verstärkungsfunktion der Blattfedern 11 zu nutzen. Wenn ein Drehmoment in der besagten Drehrichtung durch den nicht dargestellten Verbrennungsmotor von der Motorseite 18 kommend über den Außenlamellenträger 4 und die Außenlamellen 5 bei eingerückter Reibkupplung 1 auf die Innenlamellen 9 und den Innenlamellenträger 8 eingeleitet wird, sorgt das Drehmoment in der besagten Drehrichtung dafür, dass der Reibschluss zwischen Außenlamellen 5 und Innenlamellen 9 durch die auf Schub beanspruchten, aufgestellten Blattfedern 11 verstärkt wird. Somit steigt die Drehmomentkapazität der Reibkupplung 1, wodurch die Reibkupplung 1 kleiner ausgelegt werden kann, als dies ohne Verstärkungsfunktion der Blattfedern 11 der Fall gewesen wäre. Anders ausgedrückt, sind durch die Verstärkungsfunktion der Blattfedern 11 Anpresskraftverluste kompensierbar.

Insbesondere ist die Reibkupplung 1, genauer gesagt die trockene Lamellenkupplung, in ein nichtdargestelltes Hybridmodul zum An- und Abkoppeln eines Verbrennungsmotors an den und vom Antriebsstrang eines Kraftfahrzeugs ausgebildet, d.h. die Reibkupplung 1 bildet eine K0-Kupplung. Bei dem Hybridmodul kann es sich um ein Hybridmodul mit koaxialem Elektromotor, dessen Rotor die K0-Kupplung umgibt, oder um ein Hybridmodul mit achsparallelem Elektromotor, der eine Riemenscheibe antreibt, die die K0-Kupplung umgibt, handeln. Im letztgenannten Fall ist diese Riemenscheibe aus dem Rotorträger 7 und dem Rotor 22 einteilig ausgebildet, oder die Riemenscheibe wird vom Rotorträger 7 getragen, d.h. ist in dessen Außenumfang auf den Rotorträger 7 aufgezogen.

### Bezugszeichenliste

- 1: Reibkupplung
- 2: Eingangsteil
- 3: Drehachse
- 4: Außenlamellenträger
- 5: Außenlamelle
- 6: Ausgangsteil
- 7: Rotorträger
- 8: Innenlamellenträger
- 9: Innenlamelle
- 10: Federeinrichtung
- 11: Blattfeder
- 12: Adapterring
- 13: Befestigungslasche
- 14: Drucktopf
- 15: Modulationsfeder
- 16: axiale Richtung
- 17: Getriebeseite
- 18: Motorseite
- 19: Querschnitt
- 20: radiale Richtung
- 21: Nabe
- 22: Rotor
- 23: Ausrückvorrichtung
- 24: Umfangsfläche

## Patentansprüche

1. Reibkupplung (1) für einen Antriebsstrang eines Kraftfahrzeugs, aufweisend:
- ein Eingangsteil (2) mit einem durch zumindest einen Antriebsmotor um eine Drehachse (3) drehbaren Außenlamellenträger (4), wobei an dem Außenlamellenträger (4) zumindest eine Außenlamelle (5) befestigt ist;
- ein Ausgangsteil (6) mit einem Rotorträger (7) und einem von dem Rotorträger (7) getrennten Innenlamellenträger (8), wobei an dem Innenlamellenträger (8) zumindest eine Innenlamelle (9) befestigt ist;
- zumindest eine Federeinrichtung (10), mit der die zumindest eine Außenlamelle (5) und die zumindest eine Innenlamelle (9) zum Schließen der Reibkupplung (1) mit einer Anpresskraft verspannbar sind; und
- zumindest eine Blattfeder (11), die mit dem Innenlamellenträger (8) und dem Rotorträger (7) derart verbunden ist, dass die zumindest eine Blattfeder (11) bei Einleitung eines Drehmoments durch den Antriebsmotor die Anpresskraft mit einer Verstärkungskraft verstärkt,
**dadurch gekennzeichnet, dass** die zumindest eine Blattfeder (11) über einen Adapterring (12) mit dem Rotorträger (7) verbunden ist, wobei der Adapterring (12) eine Mehrzahl von radial nach innen gerichtete Befestigungslaschen (13) aufweist, über die der Adapterring (12) mit dem Rotorträger (7) verbunden ist und die einen Drucktopf (14) durchgreifen, über den die zumindest eine Federeinrichtung (10) die zumindest eine Außenlamelle (5) und die zumindest eine Innenlamelle (9) verspannt.

2. Reibkupplung (1) nach Anspruch 1, wobei zwischen dem Innenlamellenträger (8) und dem Drucktopf (14) eine Modulationsfeder (15) angeordnet ist.

3. Reibkupplung (1) nach Anspruch 1 oder 2, wobei die Verstärkungskraft in eine axiale Richtung (16) gerichtet ist.

4. Reibkupplung (1) nach einem der vorhergehenden Ansprüche, wobei die Verstärkungskraft in Richtung einer Getriebeseite (17) der Reibkupplung (1) gerichtet ist.

5. Reibkupplung (1) nach einem der vorhergehenden Ansprüche, wobei die zumindest eine Blattfeder (11) beim Verstärken der Anpresskraft mit der Verstärkungskraft auf Schub beansprucht ist.

6. Reibkupplung (1) nach einem der vorhergehenden Ansprüche, wobei die zumindest eine Blattfeder (11) mit dem Innenlamellenträger (8) vernietet ist.

7. Reibkupplung (1) nach einem der vorhergehenden Ansprüche, wobei die zumindest eine Blattfeder (11) in einer axialen Richtung (16) neben dem Innenlamellenträger (8) angeordnet ist.

8. Reibkupplung (1) nach einem der vorhergehenden Ansprüche, wobei die zumindest eine Federeinrichtung (10) oder ein Drucktopf (14), über den die zumindest eine Federeinrichtung (10) die zumindest eine Außenlamelle (5) und die zumindest eine Innenlamelle (9) verspannt, einen Querschnitt (19) des Innenlamellenträgers (8) in einer radialen Richtung (20) um weniger als 50 % überspannt.

## Claims

1. A friction clutch (1) for a drivetrain of a motor vehicle, comprising:
- an input part (2) having an outer plate carrier (4) rotatable about an axis of rotation (3) by at least one drive motor, wherein at least one outer plate (5) is attached to the outer plate carrier (4);
- an output part (6) having a rotor carrier (7) and an inner plate carrier (8) separated from the rotor carrier (7), wherein at least one inner plate (9) is attached to the inner plate carrier (8);
- at least one spring device (10), with which the at least one outer plate (5) and the at least one inner plate (9) can be tensioned with a pressing force for closing the friction clutch (1); and
- at least one leaf spring (11) which is connected to the inner plate carrier (8) and the rotor carrier (7) in such a way that the at least one leaf spring (11) increases the pressing force with a boosting force when a torque is introduced by the drive motor,
**characterised in that** the at least one leaf spring (11) is connected to the rotor carrier (7) via an adapter ring (12), wherein the adapter ring (12) has a plurality of radially inwardly directed attachment tabs (13), via which the adapter ring (12) is connected to the rotor carrier (7) and which engage through a pressure pot (14), via which the at least one spring device (10) tensions the at least one outer plate (5) and the at least one inner plate (9).

2. The friction clutch (1) according to claim 1, wherein a modulation spring (15) is arranged between the inner plate carrier (8) and the pressure pot (14).

3. The friction clutch (1) according to claim 1 or 2, wherein the boosting force is directed in an axial direction (16).

4. The friction clutch (1) according to any one of the preceding claims, wherein the boosting force is directed in the direction of a transmission side (17) of the friction clutch (1).

5. The friction clutch (1) according to any one of the preceding claims, wherein the at least one leaf spring (11) is subjected to shear stress when the pressing force is boosted with the boosting force.

6. The friction clutch (1) according to any one of the preceding claims, wherein the at least leaf spring (11) is riveted to the inner plate carrier (8).

7. The friction clutch (1) according to any one of the preceding claims, wherein the at least one leaf spring (11) is arranged next to the inner plate carrier (8) in an axial direction (16).

8. The friction clutch (1) according to any one of the preceding claims, wherein the at least one spring device (10) or a pressure pot (14), via which the at least one spring device (10) tensions the at least one outer plate (5) and the at least one inner plate (9), spans a cross section (19) of the inner plate carrier (8) by less than 50% in a radial direction (20).

## Revendications

1. Embrayage à friction (1) pour une chaîne cinématique d'un véhicule à moteur, comprenant :
- une partie entrée (2) dotée d'un support de lamelles extérieures (4) pouvant tourner autour d'un axe de rotation (3) au moyen d'au moins un moteur d'entraînement, au moins une lamelle extérieure (5) étant fixée au support de lamelles extérieures (4) ;
- une partie sortie (6) dotée d'un support de rotor (7) et d'un support de lamelles intérieures (8) séparé du support de rotor (7), au moins une lamelle intérieure (9) étant fixée au support de lamelles intérieures (8) ;
- au moins un dispositif à ressort (10), avec lequel au moins ladite lamelle extérieure (5) et au moins ladite lamelle intérieure (9) peuvent être serrées avec une force de pression pour fermer l'embrayage à friction (1) ; et
- au moins un ressort à lames (11) qui est relié au support de lamelles intérieures (8) et au support de rotor (7) de façon qu'au moins ledit ressort à lames (11) amplifie la force de pression avec une force d'amplification en introduisant un couple par le biais du moteur d'entraînement,
**caractérisé en ce qu'**au moins ledit ressort à lames (11) est relié au support de rotor (7) par le biais d'un anneau adaptateur (12), l'anneau adaptateur (12) présentant une pluralité de pattes de fixation (13) orientées de manière radiale vers l'intérieur, par le biais desquelles l'anneau adaptateur (12) est relié au support de rotor (7) et qui traversent un pot à pression (14), par le biais duquel au moins ledit dispositif à ressort (10) serre au moins ladite lamelle extérieure (5) et au moins ladite lamelle intérieure (9).

2. Embrayage à friction (1) selon la revendication 1, dans lequel un ressort de modulation (15) est disposé entre le support de lamelles intérieures (8) et le pot à pression (14).

3. Embrayage à friction (1) selon l'une des revendications 1 ou 2, dans lequel la force d'amplification est orientée dans une direction axiale (16).

4. Embrayage à friction (1) selon l'une quelconque des revendications précédentes, dans lequel la force d'amplification est orientée en direction d'un côté de transmission (17) de l'embrayage à friction (1).

5. Embrayage à friction (1) selon l'une quelconque des revendications précédentes, dans lequel l'au moins un ressort à lames (11) est sollicité en poussée lors de l'amplification de la force de pression avec la force d'amplification.

6. Embrayage à friction (1) selon l'une quelconque des revendications précédentes, dans lequel au moins ledit ressort à lames (11) est riveté au support de lamelles intérieur es(8).

7. Embrayage à friction (1) selon l'une quelconque des revendications précédentes, dans lequel au moins ledit ressort à lames (11) est disposé dans une direction axiale (16) adjacent au support de lamelles intérieures (8).

8. Embrayage à friction (1) selon l'une quelconque des revendications précédentes, dans lequel au moins ledit dispositif à ressort (10) ou un pot à pression (14), par le biais duquel au moins ledit dispositif à ressort (10) serre au moins ladite lamelle extérieure (5) et au moins ladite lamelle intérieure (9), surplombe une section transversale (19) du support de lamelles intérieures (8) dans une direction radiale (20) sur moins de 50 %.
